# EUROPEAN PATENT APPLICATION

(11) **EP 1 146 751 A1**
(43) Date of publication of application: **17.10.2001**
(21) Application number: 01201011.2
(22) Date of filing: 16.03.2001
(51) Int. Cl.: H04Q 3/52

(54) **Modular hierarchical data switch**

(30) Priority: 17.03.2000 US 527742
(71) Applicant: Sancastle Technologies Ltd., Yokneam (IL)
(72) Inventor: Czeiger, Moshe, Haifa 26341 (IL)
(74) Representative: Mertens, Hans Victor

(57) **Abstract**

Switching apparatus for transferring data, including: a plurality of connecting links (13A, 13B, 13C, 13D, 33A, 33B, 33C, 33D, 53A, 53B, 53C, 53D, 73A, 73B, 73C, 73D), each link being able to transfer the data; and a plurality of modules (12, 32, 52, 72), communicating with the connecting links. Each module includes: one or more data-ports (16A, 16B, 16C, 16D), each data-port being able to transfer the data; a link selector (14), which is able to selectably couple the data-ports within the module to transfer data over at least one of the connecting links; and a data-port selector (18, 20A, 20B, 20C, 20D), which is able to selectably couple the data-ports within the module to receive data over at least one of the connecting links. Data is transferred from an originating data-port among the data-ports of an originating module among the plurality of modules, to a destination data-port among the data-ports in a destination module among the plurality of modules. To accomplish the transfer, one of the connecting links is selected by both the link selector of the originating module and by the data-port selector of the destination module, and the data is transferred over the selected link.

## Description

### FIELD OF THE INVENTION

The present invention relates generally to switching devices, and specifically to modular data switching devices.

### BACKGROUND OF THE INVENTION

Many different types of switching devices for transferring data between a plurality of entities are known in the art. Given the plurality of entities, herein assumed by way of example to be nodes in a computing network, an ideal switching device is able to link any one of the nodes to any other of the nodes. Furthermore, the ideal switching device is able to perform the linkage regardless of other links which may already have been formed by the device, i.e., the device should be non-blocking. While ideal switching devices may be attainable for small numbers of nodes, they are impractical for large numbers of nodes. In constructing a practical switching device, other conflicting considerations, such as communication delay and required bandwidth, have to be considered.

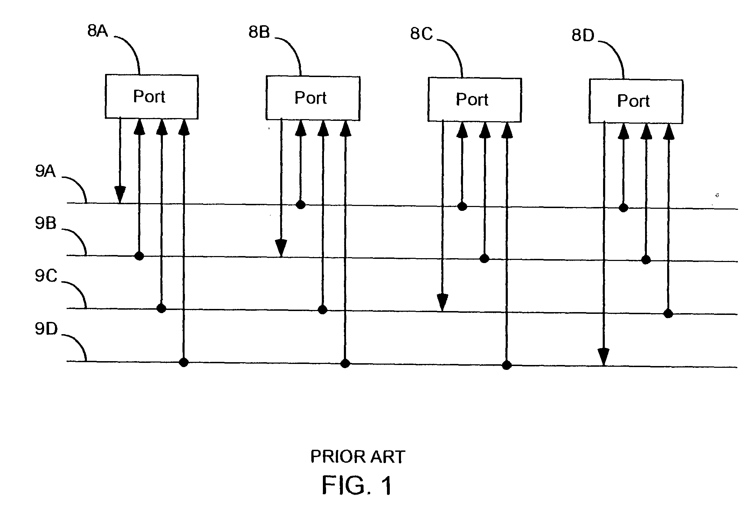

Fig. 1 shows how four ports may be connected so that there is always a data path between any two of the ports, as is known in the art. Each port 8A, 8B, 8C, or 8D transmits to a respective bus 9A, 9B, 9C, or 9D. Each port is also connected to all of the busses so as to be able to receive from each of the other busses. The system illustrated in Fig. 1 may be generalized to N ports, where N is any integer. Given N ports between which data is to be transferred, the ports are coupled to N busses. While it may be practical to use this system when N is relatively small, it is impractical to connect an array comprising large numbers of data-ports in this fashion, since there would necessarily have to be N separate busses connected to each data-port.

Switching device types known in the art include crosspoint switches, crossbar switches, delta network switches, and fiber channel switches. For N ports, crosspoint and crossbar switches need of the order of N² connections, so that crosspoint and crossbar switches become impractical for large values of N. Some modifications and additions to these types of switching devices, and other switching devices, are described hereinbelow.

U. S. patent 4, 605, 926, to Georgiou, whose disclosure is incorporated herein by reference, describes a cross-point switch comprising an array of cross-point matrices. The switch incorporates external lines by which internal lines of the matrices may be linked via buffers. Redundant matrices may be incorporated in the switch to accommodate fault tolerance.

U. S. patent 4,814,762, to Franaszek, whose disclosure is incorporated herein by reference, describes a switching system comprising a cross-point switch and a delta network switch connected in parallel. The switching system uses the delta network to reserve a connection of the cross-point switch at some fixed time in the future.

U. S. patent 5,261,059, to Hedberg, et al, whose disclosure is incorporated herein by reference, describes an interface between a crossbar switch and a host computer. The interface uses data buffering and memory devices to facilitate and track data transfer via the switch. The interface off-loads, from host computers using the interface, functions such as routing and security checking of data.

U. S. patent 5,420,853, to McRoberts, et al, whose disclosure is incorporated herein by reference, describes a method for self-controlling an (N + 1) by (N +1) crossbar switch. The method comprises sending a request signal from a data processing element to the switch, which request signal comprises an address for the data to be transferred. The data is stored temporarily in a buffer, and the method includes routing the data to an appropriate destination.

U. S. patent 5,519,695, to Purohit, et al, whose disclosure is incorporated herein by reference, describes a switch element for fiber channel networks. Fiber channel is a switched protocol that allows concurrent communication between nodes connected to the network. Fiber channel uses an interconnection scheme known as a fabric to connect nodes attached to the fabric to ports of the fabric. The disclosure describes a switch element which operates in a circuit-switched mode or a frame-switched mode. In the circuit-switched mode a dedicated path between two ports of the fabric is established before data transfer occurs. The frame-switched mode is a connectionlesss data transfer mode wherein a bandwidth is dynamically allocated on a frame-by-frame basis.

U. S. patent 5,894,481, to Book, whose disclosure is incorporated herein by reference, describes a fiber channel switch. A fabric of the fiber channel has a memory which is shared by a plurality of fabric ports. Each fabric port includes a port controller employing a distributed queuing algorithm. The algorithm provides a method for deciding when and where frame transfers between the ports should be made.

U. S. patent 5,418,779, to Yemini, et al., whose disclosure is incorporated herein by reference, describes a high-speed switched network architecture. The architecture comprises switching nodes which are connected directly to respective local access nodes, and which are interconnected by communication links. Each node has a routing tree, wherein the node acts as a destination node, associated with the node. Each routing tree specifies a subset of incoming links from which each node receives data, and an outgoing link to which the node transfers received data. The routing trees are implemented sequentially according to predetermined time bands.

### SUMMARY OF THE INVENTION

It is an object of some aspects of the present invention to provide an improved switching architecture.

It is a further object of some aspects of the present invention to provide a switching architecture which enables data transfer with reduced queuing.

It is a yet further object of some aspects of the present invention to provide a non-blocking switching architecture between data-ports with relatively few connections at each data-port.

In preferred embodiments of the present invention, a switching array comprises a plurality of modules, each module comprising at least one two-way duplex data-port. The modules are mutually connected by a plurality of selectable links, comprising data transfer busses, between the modules. Typically, the number of selectable links is less than or equal to the number of data-ports of the array.

Within each module, the data-ports of the module are coupled together by a plurality of busses, most preferably equal in number to the number of data-ports of the module. The busses of each module are coupled to a respective subset of the plurality of selectable links via a link selector and controller comprised within each module. Also within each module is a data-port selector multiplexer, which couples each data-port of the module to all other selectable-link subsets of the other modules of the array. Sets of buffers within each module are provided to temporarily store data, the buffers being coupled respectively to the module busses, the link selector, and the selector multiplexer of each module.

Data transferred between data-ports of the array is most preferably in the form of one or more data-frames comprising a destination data-port address. When the destination data-port and the originating data-port are comprised within the same module, each data-frame transfers directly on one of the internal busses of the module. When the destination data-port and the originating data-port are within different modules the link selector and controller of the originating module select one of the plurality of links to act as a transfer link. The originating data-port is coupled to the transfer link via the link selector and the internal busses of the originating module. The data-port selector multiplexer of the destination module couples the destination data-port to the transfer link. Thus, a data-frame comprising an address of the destination data-port is able to be automatically transferred to the destination port. The sets of buffers enable the transfer to be implemented regardless of whether the data-ports and/or the selectable links are engaged in a data transfer, by temporarily storing the data. Each port is effectively always available for receiving and/or transmitting data since each port, each link selector, and each selector multiplexer is coupled to a respective buffer.

Coupling ports of a plurality of modules by selectable links enables data to be transferred between any two of the ports, with substantially no queuing if the number of ports is equal to the number of links, while maintaining a simple architecture. Because there is a relatively small number of connections to each port in the switching array, the architecture is economical for implementation in integrated circuit form and enables efficient use of the links. Alternatively, if queuing can be tolerated, the number of links can be less than the number of ports. Furthermore, since the ports are grouped in modules, the array is easily scaleable by increasing the number of modules, and preferably, but not necessarily, the number of selectable links.

In some preferred embodiments of the present invention, data which is transferred between an originating port and a destination port on separate modules expects an acknowledgment. Once the acknowledgment has been transmitted, the destination port is able to receive data from another originating port, using one or more of the buffers comprised in the destination module.

In some preferred embodiments of the present invention, at least some of the modules comprise different numbers of data-ports.

There is therefore provided, in accordance with a preferred embodiment of the present invention, switching apparatus for transferring data, including:
a plurality of connecting links, each link being able to transfer the data; and
a plurality of modules, communicating with the connecting links, each module including:
   one or more data-ports, each data-port being able to transfer the data;
   a link selector, which is able to selectably couple the data-ports within the module to transfer data over at least one of the connecting links; and
   a data-port selector, which is able to selectably couple the data-ports within the module to receive data over at least one of the connecting links,
   so that to transfer data from an originating data-port among the data-ports of an originating module among the plurality of modules to a destination data-port among the data-ports in a destination module among the plurality of modules, one of the connecting links is selected by both the link selector of the originating module and by the data-port selector of the destination module, and the data is transferred over the selected link.

Preferably, each module includes at least two data-ports.

Preferably, the at least one connecting link for transferring data is different from the at least one connecting link for receiving data.

Preferably, each of the plurality of modules includes one or more busses which couple the one or more data-ports of the respective module.

Preferably, at least some of the plurality of modules include equal numbers of busses and data-ports.

Preferably, at least one of the data-port selectors includes:
a port multiplexer which selectably couples to the data-ports of the respective module;
a buffer, which is adapted to store data transferred by the port multiplexer, coupled to the port multiplexer; and
one or more sub-multiplexers which couple the plurality of connecting links to the port multiplexer.

Preferably, the apparatus comprises for at least one of the plurality of modules a controller which controls the operation of the link selector.

Preferably, the plurality of connecting links includes a number of links equal to a total number of the data-ports in the plurality of modules.

Preferably, the plurality of connecting links includes a number of links different from a total number of the data-ports in the plurality of modules.

Preferably, the apparatus includes for at least one of the plurality of modules:
at least one first buffer, which temporarily stores the data, coupled to the one or more data-ports;
at least one second buffer, which temporarily stores the data, coupled to the link selector; and
at least one third buffer, which temporarily stores the data, coupled to the data-port selector.

There is further provided, in accordance with a preferred embodiment of the present invention, a method for transferring data between a plurality of data-ports, including:
providing a switch, including a plurality of modules, on which the data-ports are distributed, interconnected by a plurality of selectable links;
receiving the data for input at an originating data-port on a first one of the modules, destined for output at a destination data-port on a second one of the modules;
selecting one of the links to transfer the data between the first and second modules;
coupling the selected link to the originating data-port on the first module;
coupling the selected link to the destination data-port on the second module; and
transferring the data from the originating data-port via the selected link to the destination data-port.

Preferably, providing the switch includes providing a plurality of busses within each module and coupling the plurality of busses to the plurality of data-ports within each module.

Preferably, providing the switch includes providing for each module a port multiplexer and one or more sub-multiplexers, and coupling the selected link to the destination data-port includes coupling the selected link to the one or more sub-multiplexers and selectably coupling the port multiplexer to the one or more sub-multiplexers and to the destination data-port.

Preferably, transferring the data includes:
checking at the destination data-port whether a first set of data expect an acknowledgment;
responsive to the check, transmitting the acknowledgment to the originating data-port; and
transmitting a second set of data to the destination port from one of the plurality of data-ports different from the originating port.

There is further provided, in accordance with a preferred embodiment of the present invention, a method for transferring data between a plurality of data-ports, including:
providing a switch, including a plurality of modules, on which the data-ports are distributed, interconnected by a plurality of selectable links;
receiving the data for input at an originating data-port on a first of the modules, destined for output at a plurality of destination data-ports on at least one other of the modules;
selecting at least one of the links to transfer the data between the first and the at least one other of the modules; coupling the at least one of the selected links to the originating data-port on the first module;
coupling the at least one of the selected links to the plurality of data-ports on the least one other of the modules; and
transferring the data from the originating data-port via the at least one of the selected links to the destination data-ports.

Preferably, transferring the data includes transferring the data substantially simultaneously.

The present invention will be more fully understood from the following detailed description of the preferred embodiments thereof, taken together with the drawings, in which:

### BRIEF DESCRIPTION OF THE DRAWINGS

Fig. 1 is a schematic block diagram showing how four ports may be connected so that there is always a data path between any two of the ports, as is known in the art;
Figs. 2A and 2B are schematic block diagrams of a switching array, according to a preferred embodiment of the present invention;
Fig. 3 is a schematic block diagram of a module of the array of Figs. 2A and 2B, according to a preferred embodiment of the present invention;
Fig. 4A is a flow chart showing data transfer from a port in the module of Fig. 3, according to a preferred embodiment of the present invention; and
Fig. 4B is a flow chart showing data transfer to a port within the module of Fig. 3 from outside the module, according to a preferred embodiment of the present invention.

### DETAILED DESCRIPTION OF PREFERRED EMBODIMENTS

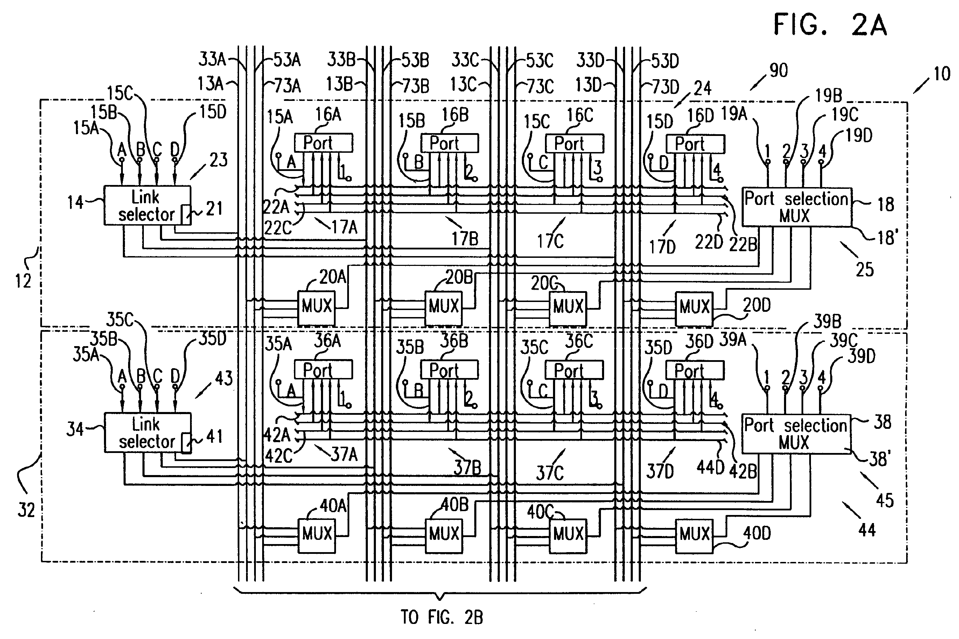

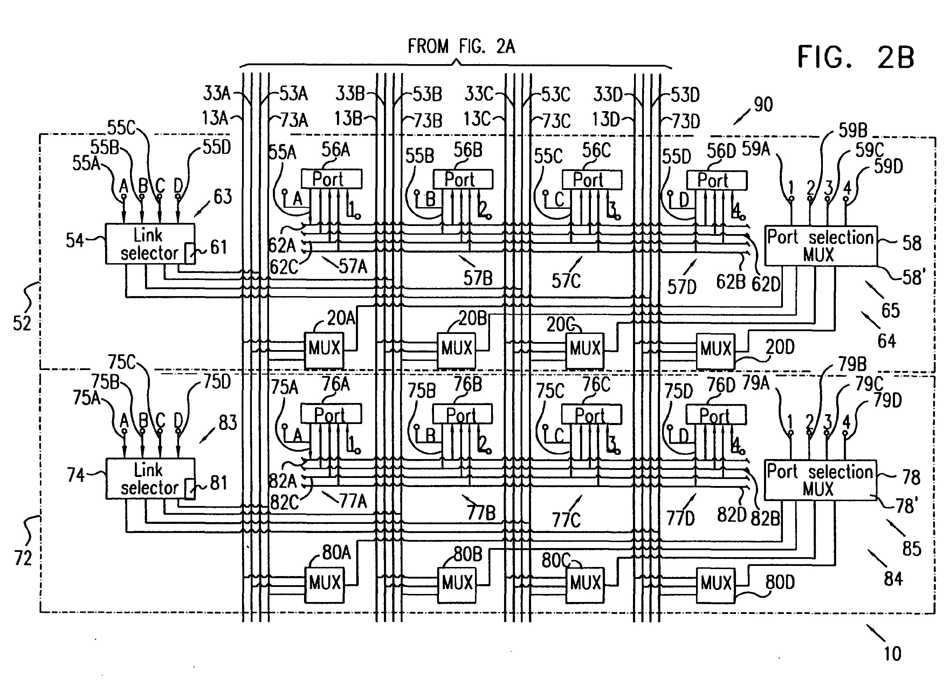

Reference is now made to Figs. 2A and 2B, which are schematic block diagrams of a switching array 10, according to a preferred embodiment of the present invention. Array 10 comprises a plurality of modules 12, 32, 52, and 72 which are substantially identical in operation and construction. Most preferably, array 10 is implemented as one or more application specific integrated circuits (ASICs) or other custom-built device, on a modular basis corresponding to the plurality of modules of the array. Alternatively, array 10 is implemented from one or more discrete devices, or from a combination of discrete and custom devices. Array 10 also comprises a plurality of selectable links 13A, 13B, 13C, 13D, 33A, 33B, 33C, 33D, 53A, 53B, 53C, 53D, 73A, 73B, 73C, and 73D, hereinafter referred to as links 90. Each link 90 is a bus which is used to transfer data between modules of the array, as described below.

Module 12 comprises a plurality of ports 16A, 16B, 16C, and 16D, hereinafter referred to as ports 16, wherein each port is preferably two-way. Each port 16 is connected to a respective node (not shown), such as a server or a workstation or a network connection, so that data can be passed between the port and its respective node. Within module 12, ports 16 are able to transfer data between themselves via a plurality of bus lines 22A, 22B, 22C, and 22D, hereinafter referred to as lines 22, the number of lines 22 corresponding to the number of ports 16. Each port 16 transfers data from the port to one of lines 22 via a respective outgoing bus line 15A, 15B, 15C, and 15D, hereinafter termed outgoing lines 15. Each port 16 receives data from one of lines 22 via one of a respective plurality of incoming bus lines 17A, 17B, 17C, and 17D, hereinafter termed incoming lines 17.

For example, data transfers from port 16A to port 16C via outgoing line 15A, line 22A, and one of incoming lines 17C. Data transfers from port 16D to port 16A via outgoing line 15D, line 22D, and one of incoming lines 17A. It will be understood that since the number of lines 22 corresponds to the number of ports 16, there is always a line 22 available for transferring data within module 12.

Outgoing lines 15A, 15B, 15C, and 15D are also coupled to a link selector 14 comprised in module 12. Link selector 14 is preferably operated by a controller 21 comprised in the selector, and is most preferably able to connect each of lines 15 to a plurality of connecting links 13A, 13B, 13C, and 13D, i.e., to a number of connecting links equal to the number of ports 16. Alternatively, the number of connecting links is different from the number of ports 16. Connecting links 13A, 13B, 13C, and 13D are referred to hereinafter as links 13. Connecting links 13, and the transfer of data to and from the links, are described in greater detail below.

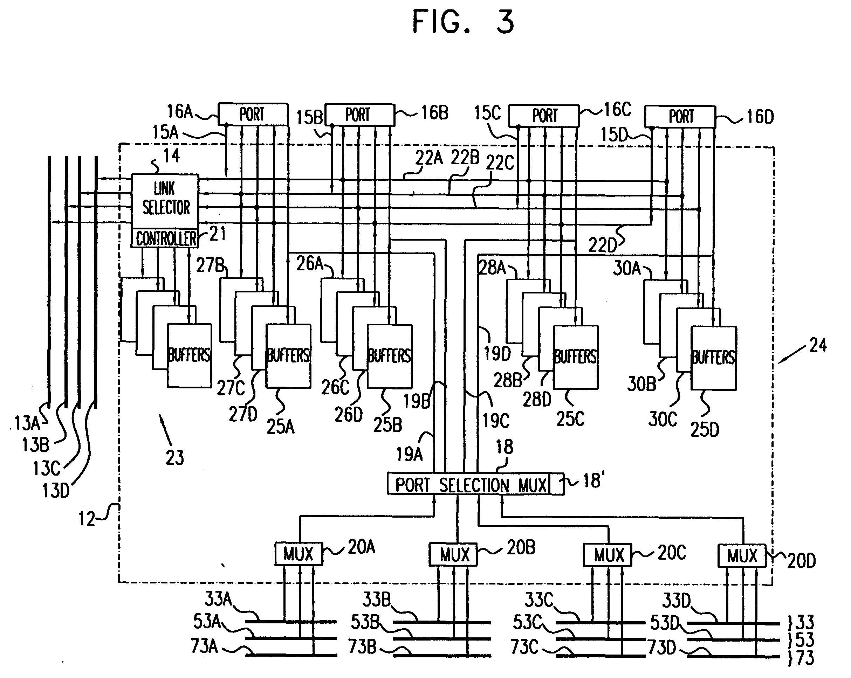

Link selector 14 and ports 16 are respectively coupled to buffers 23 and 24. The function of buffers 23 and 24, together with a detailed description of their operation and of the operation of module 12, is described with reference to Fig. 3 hereinbelow.

Modules 32, 52, and 72 respectively comprise link selectors 34, 54, and 74, which respectively comprise controllers 41, 61, and 81. The selectors are respectively coupled to buffers 43, 63, and 83, and are implemented and connected substantially as described herein for link selector 14. Similarly, modules 32, 52, and 72 respectively comprise ports 36A, 36B, 36C, and 36D, hereinafter referred to as ports 36; ports 56A, 56B, 56C, and 56D, hereinafter referred to as ports 56; and ports 76A, 76B, 76C, and 76D, hereinafter referred to as ports 76, which operate and are connected substantially as described herein for respective ports 16. Ports 36, 56, and 76, are respectively coupled to buffers 44, 64, and 84.

Modules 32, 52, and 72 also respectively comprise outgoing lines 35A, 35B, 35C, and 35D; outgoing lines 55A, 55B, 55C, and 55D; and outgoing lines 75A, 75B, 75C, and 75D, which operate and are connected substantially as described herein for respective outgoing lines 15A, 15B, 15C, and 15D. Modules 32, 52, and 72 respectively comprise incoming lines 37A, 37B, 37C, and 37D; incoming lines 57A, 57B, 57C, and 57D; and incoming lines 77A, 77B, 77C, and 77D, which operate and are connected substantially as described hereinabove for respective incoming lines 17A, 17B, 17C, and 17D. Modules 32, 52, and 72 also respectively comprise bus lines 42A, 42B, 42C, and 42D; bus lines 62A, 62B, 62C, and 62D; and bus lines 82A, 82B, 82C, and 82D, which operate and are connected substantially as described hereinabove for respective bus lines 22A, 22B, 22C, and 22D.

Link selector 34 in module 32 is most preferably able to connect each of outgoing lines 35A, 35B, 35C, and 35D to a plurality of connecting links 33A, 33B, 33C, and 33D, (hereinafter referred to as links 33) i.e., to a number of connecting links equal to the number of ports in module 32. Alternatively, the number of connecting links is less than the number of ports in module 32. Similarly, link selector 54 in module 52 is most preferably able to connect each of outgoing lines 55A, 55B, 55C, and 55D to a plurality of connecting links 53A, 53B, 53C, and 53D, hereinafter referred to as links 53, and link selector 74 in module 72 is most preferably able to connect each of outgoing lines 75A, 75B, 75C, and 75D to a plurality of connecting links 73A, 73B, 73C, and 73D, hereinafter referred to as links 33.

Ports 16 of module 12, in addition to being able to convey data between themselves and to being able to transmit data via link selector 14 as described hereinabove, are able to receive data via a port selection multiplexer 18. An output of multiplexer 18 is respectively connected to ports 16 via lines 19A, 19B, 19C, and 19D. Multiplexer 18 most preferably comprises a buffer 18' and is also coupled to buffers 25, whose function is described with reference to Fig. 3 below. Port multiplexer 18 receives data via a plurality of substantially similar sub-multiplexers 20A, 20B, 20C, and 20D. Sub-multiplexer 20A is connected at its input to connecting links 33A, 53A, and 73A. Similarly, sub-multiplexer 20B is connected at its input to connecting links 33B, 53B, and 73B; sub-multiplexer 20C is connected at its input to connecting links 33C, 53C, and 73C; and sub-multiplexer 20D is connected at its input to connecting links 33D, 53D, and 73D. It will be appreciated that ports 16 are connected via multiplexer 18 and sub-multiplexers 20A, 20B, 20C, and 20D to all connecting links of array 10 other than links 13, i.e., to all links other than connecting links on which data is transmitted from ports 16. Thus, multiplexer 18 and sub-multiplexers 20A, 20B, 20C, and 20D together form a port selector which is able to couple any of ports 16 of module 12 to any connecting links in array 10 apart from links which are coupled to link selector 14.

Module 32 comprises a port multiplexer 38 comprising a buffer 38', buffers 45, and sub-multiplexers 40A, 40B, 40C, and 40D, which are connected to ports 36A, 36B, 36C, and 36D in a substantially similar manner as multiplexer 18 and sub-multiplexers 20A, 20B, 20C, and 20D for module 12. Thus, ports 36A, 36B, 36C, and 36D are connected via multiplexer 38 and sub-multiplexers 40A, 40B, 40C, and 40D to all connecting links of array 10 other than links 33, i.e., to all links other than connecting links on which data is transmitted from ports 36A, 36B, 36C, and 36D. Multiplexer 38, buffer 38', buffers 45, and sub-multiplexers 40A, 40B, 40C, and 40D together form a port selector which is able to couple any of ports 36 of module 32 to any connecting links in array 10 apart from links which are coupled to link selector 34.

Similarly, ports 56A, 56B, 56C, and 56D in module 52 are connected via a multiplexer 58 comprising a buffer 58', buffers 65, and sub-multiplexers 60A, 60B, 60C, and 60D, acting as a port selector, to all links other than connecting links 53 on which data is transmitted from ports 56A, 56B, 56C, and 56D. Also, ports 76A, 76B, 76C, and 76D in module 72 are connected via a multiplexer 78 comprising a buffer 78', buffers 85, and sub-multiplexers 80A, 80B, 80C, and 80D, acting as a port selector, to all links other than connecting links 73 on which data is transmitted from ports 76A, 76B, 76C, and 76D.

Reference is now made to Fig. 3, which is a schematic block diagram of module 12, according to a preferred embodiment of the present invention. As shown in Fig. 3, link selector 14 is coupled to a plurality of buffers 23, most preferably equal in number to the number of ports comprised in module 12. Multiplexer 18 comprising buffer 18' is coupled at each of its lines 19A, 19B, 19C, and 19D to one of buffers 25, herein termed respectively buffer 25A, 25B, 25C, and 25D.

Buffers 24 comprise: buffers 27B, 27C, and 27D, which are coupled respectively to busses 22B, 22C, and 22D, and which are used to store data for port 16A; buffers 26A, 26C, and 26D, which are coupled respectively to busses 22A, 22C, and 22D, and which are used to store data for port 16B; buffers 28A, 28B, and 28D, which are coupled respectively to busses 22A, 22B, and 22D, and which are used to store data for port 16C; and buffers 30A, 30B, and 30C, which are coupled respectively to busses 22A, 22B, and 22C, and which are used to store data for port 16D. Buffers 24 are most preferably First-in First-out (FIFO) memory devices.

Modules 32, 52, and 72 are implemented substantially as described above for module 12. Thus buffers 44, 64, and 84 respectively comprise 12 buffers so that each port of array 10 has 3 buffers which are able to store data for the respective port. Similarly, multiplexers 38, 58; and 78 are coupled at each of their respective lines to buffers 45, 65, and 85, each of buffers 45, 65, and 85 respectively comprising 4 buffers.

It will thus be appreciated that each module in array 10 comprises a total of 21 buffers. It will also be appreciated that a module having N ports coupled by N busses, implemented substantially as described above for module 12, will have a total of Nx(N+1) + 1 buffers.

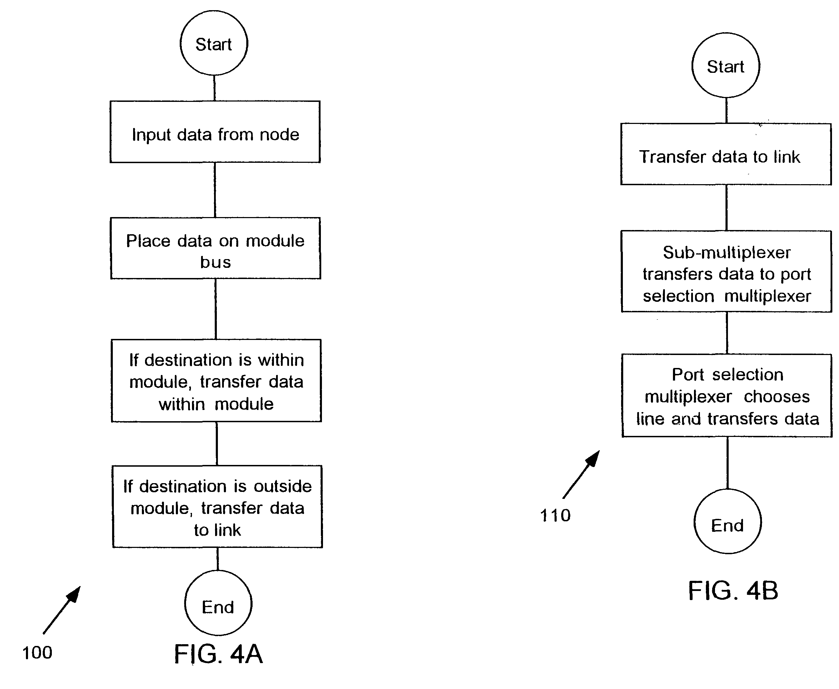

Fig. 4A is a flow chart 100 showing data transfer from a port in array 10, according to a preferred embodiment of the present invention. In order to explain flow chart 100, specific examples of data being transferred from the node attached to port 16A, acting as an originating port, to a destination port comprised in array 10, are assumed. It will be understood, however, that array 10 is able to transfer data between any two of its ports, and the description hereinbelow of data transfer from port 16A is an example for the purpose of clarifying the operation of array 10.

In a first step, data is input from the node attached to port 16A, which acts as an originating port for the data. The data is preferably in the form of a data-frame generated according to an industry-standard protocol. Most preferably, the data-frame comprises data, such as a header, giving a destination port to which the data-frame is to be transferred. Alternatively, the data is in some other standard form wherein the destination port is known.

In a second step, the data is placed on the bus in module 12 coupled to the output of originating port 16A, i.e., bus 22A. In a third step, if the destination port is within module 12, the data transfers automatically on internal bus line 22A of the specific module. For example, if the data into port 16A is destined for port 16C, and port 16C is available, the data is transferred between the ports. If port 16C is not available, the data is stored in the buffer on bus 22A specified for port 16C, i.e., buffer 28A, until the port is available, at which time it is transferred to the port.

If the destination port is not within the same module as the originating port, then in a fourth step controller 21 and/or link selector 14 couple bus 15A to an available link 13 and store the data in one of buffers 23. In the event that there is no available link 13, the data is stored in one of buffers 23 until one of links 13 is available, whereupon it is placed on the available link. The data transfers to the destination port as explained below with reference to Fig. 4B.

Fig. 4B is a flow chart 110 showing data transfer from a port in a module other than module 12 to a port within module 12, according to a preferred embodiment of the present invention. In order to explain flow chart 110, specific examples of data being transferred to the node attached to port 16C, acting as a destination port, from originating port 76A comprised in module 72, are assumed.

In a first step, by a method substantially similar to that described with reference to Fig. 4A for transferring data from port 16A to one of links 13, data from port 76A is placed on link 73A via link selector 74 (Fig. 2B). Link 73A is coupled to sub-multiplexers 20A, 40A, 60A, and 80A. In a second step, using the destination address (corresponding to port 16C) comprised in the data, sub-multiplexer 20A recognizes that the destination port is comprised in module 12, and transfers the data to port selection multiplexer 18.

In a third step, port selection multiplexer 18 selects the appropriate line to transfer the data, in this example line 19C, and transfers the data to port 16C. If port 16C is not available to accept the data, it is stored in the buffer coupled to the line transferring the data, in this example buffer 25C, and/or in buffer 18'.

In some preferred embodiments of the present invention, data is transferred from a first originating port in a first module to a destination port in a second module, substantially as described above with reference to Figs. 4A and 4B. Furthermore, an acknowledgment that the data has been received is transferred from the destination port to the originating port. Once the acknowledgment has been sent, data from a second originating port may be received by the destination port.

It will be appreciated that while the preferred embodiments described above comprise modules within array 10 having equal numbers of ports, arrays with modules having unequal numbers of ports can be constructed and will operate within the scope of the present invention. It will also be appreciated that when the number of connecting links associated with a specific module is equal to the number of ports within the module, there will always be a path available for data transfer from each port of the specific module. For an array where this condition is true for all modules within the array, so that the total number of links equals the total number of ports within the array, there will always be a path available for any possible data transfer within the array. It will further be appreciated that where this condition is true and the destination port is available to receive data, the data will never need to be queued. It will be understood that while the number of links does not need to be more than the number of data-ports, one or more redundant links above the number of data-ports may be incorporated into an array in order to allow for failure of a link during operation of the array.

It will be appreciated that some preferred embodiments of the present invention enable data to be broadcast in a multicast manner, i.e., data from one originating port may be transmitted substantially simultaneously to a plurality of destination ports. The data for multicasting most preferably comprises addresses of destination data-ports in a form suitable for multicasting, as is known in the art.

It will further be appreciated that preferred embodiments of the present invention may constructed in a modular fashion, and that a module may be removed from or installed into an array without appreciably affecting the operation of other modules of the array.

It will also be appreciated that those skilled in the art will be able to devise arrays using selectable connecting links to transfer data between data-ports which are variably coupled to the links, other than those arrays specifically described hereinabove. All such arrays are considered to be within the scope of the present invention

It will thus be appreciated that the preferred embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. Switching apparatus for transferring data, comprising:
a plurality of connecting links (13A, 13B, 13C, 13D, 33A, 33B, 33C, 33D, 53A, 53B, 53C, 53D, 73A, 73B, 73C, 73D), each link being able to transfer the data; and
a plurality of modules (12, 32, 52, 72), communicating with the connecting links, each module comprising:
one or more data-ports (16A, 16B, 16C, 16D), each data-port being able to transfer the data;
a link selector (14), which is able to selectably couple the data-ports within the module to transfer data over at least one of the connacting links; and
a data-port selector (18, 20A, 20B, 20C, 20D), which is able to selectably couple the data-ports within the module to receive data over at least one of the connecting links,
so that to transfer data from an originating data-port among the data-ports of an originating module among the plurality of modules to a destination data-port among the data-ports in a destination module among the plurality of modules, one of the connecting links is selected by both the link selector of the originating module and by the data-port selector of the destination module, and the data is transferred over the selected link.

2. Switching apparatus according to claim 1, wherein each module comprises at least two data-ports.

3. Switching apparatus according to claim 1 or claim 2, wherein the at least one connecting link for transferring data is different from the at least one connecting link for receiving data.

4. Switching apparatus according to any of claims 1-3, wherein at least one of the data-port selectors comprises:
a port multiplexer (18) which selectably couples to the data-ports of the respective module;
a buffer (18'), which is adapted to store data transferred by the port multiplexer, coupled to the port multiplexer; and
one or more sub-multiplexers (20A, 20B, 20C, 20D) which couple the plurality of connecting links to the port multiplexer.

5. Switching apparatus according to any of claims 1-4, and comprising for at least one of the plurality of modules a controller (21) which controls the operation of the link selector.

6. Switching apparatus according to any of claims 1-5, wherein the plurality of connecting links comprises a number of links equal to a total number of the data-ports in the plurality of modules.

7. Switching apparatus according to any of claims 1-6, wherein the plurality of connecting links comprises a number of links different from a total number of the data-ports in the plurality of modules.

8. Switching apparatus according to any of claims 1-7, and comprising for at least one of the plurality of modules:
at least one first buffer (24), which temporarily stores the data, coupled to the one or more data-ports;
at least one second buffer (23), which temporarily stores the data, coupled to the link selector; and
at least one third buffer (25), which temporarily stores the data, coupled to the data-port selector.

9. Switching apparatus according to any of claims 1-8, wherein each of the plurality of modules comprises one or more busses (22A, 22B, 22C, 22D) which couple the one or more data-ports of the respective module.

10. Switching apparatus according to claim 9, wherein at least some of the plurality of modules comprise equal numbers of busses and data-ports.

11. A method for transferring data between a plurality of data-ports (16A, 16B, 16C, 16D, 36A, 36B, 36C, 36D, 56A, 56B, 56C, 56D, 76A, 76B, 76C, 76D), comprising:
providing a switch (10), comprising a plurality of modules (12, 32, 52, 72), on which the data-ports are distributed, interconnected by a plurality of selectable links (13A, 13B, 13C, 13D, 33A, 33B, 33C, 33D, 53A, 53B, 53C, 53D, 73A, 73B, 73C, 73D) ;
receiving the data for input at an criginating data-port on a first one of the modules, destined for output at a destination data-port on a second one of the modules;
selecting one of the links to transfer the data between the first and second modules;
coupling the selected link to the originating data-port on the first module;
coupling the selected link to the destination data-port on the second module; and
transferring the data from the originating data-port via the selected link to the destination data-port.

12. A method according to claim 11, wherein providing the switch comprises providing a plurality of busses (22A, 22B, 22C, 22D, 42A, 42B, 42C, 42D, 62A, 62B, 62C, 62D) within each module and coupling the plurality of busses to the plurality of data-ports within each module.

13. A method according to claim 11 or claim 12, wherein providing the switch comprises providing for each module a port multiplexer (18) and one or more sub-multiplexers (20A, 20B, 20C, 20D), and wherein coupling the selected link to the destination data-port comprises coupling the selected link to the one or more sub-multiplexers and selectably coupling the port multiplexer to the one or more sub-multiplexers and to the destination data-port.

14. A method according to any of claims 11-13, wherein transferring the data comprises:
checking at the destination data-port whether a first set of data expect an acknowledgment;
responsive to the check, transmitting the acknowledgment to the originating data-port; and
transmitting a second set of data to the destination port from one of the plurality of data-ports different from the originating port.

15. A method for transferring data between a plurality of data-ports (16A, 16B, 16C, 16D, 36A, 36B, 36C, 36D, 56A, 56B, 56C, 56D, 76A, 76B, 76C, 76D), comprising:
providing a switch (10), comprising a plurality of modules (12, 32, 52, 72), on which the data-ports are distributed, interconnected by a plurality of selectable links (13A, 13B, 13C, 13D, 33A, 33B, 33C, 33D, 53A, 53B, 53C, 53D, 73A, 73B, 73C, 73D);
receiving the data for input at an originating data-port on a first of the modules, destined for output at a plurality of destination data-ports on at least one other of the modules;
selecting at least one of the links to transfer the data between the first and the at least one other of the modules;
coupling the at least one of the selected links to the originating data-port on the first module;
coupling the at least one of the selected links to the plurality of data-ports on the least one other of the modules; and
transferring the data from the originating data-port via the at least one of the selected links to the destination data-ports.

16. A method according to claim 15, wherein transferring the data comprises transferring the data substantially simultaneously.
